# EUROPÄISCHE PATENTSCHRIFT

(11) **EP 0 817 427 B1**
(45) Veröffentlichungstag und Bekanntmachung des Hinweises auf die Patenterteilung: **16.04.2003**
(21) Anmeldenummer: 96110184.7
(22) Anmeldetag: 24.06.1996
(51) Int. Cl.: H04L 12/56, H04Q 11/04

(54) **Adaptives kreditbasiertes Datenflusssteuerungsverfahren**
Adaptive credit based data flow control method
Méthode adaptative de contrôle de débit de données, à base de crédits

(43) Veröffentlichungstag der Anmeldung: 07.01.1998
(73) Patentinhaber: SIEMENS AKTIENGESELLSCHAFT, 80333 München (DE)
(72) Erfinder: Gradischnig, Klaus D., Dipl.-Ing., 82131 Gauting (DE)

(56) Entgegenhaltungen:
- EP-A- 0 573 739
- COMPUTER COMMUNICATIONS REVIEW, Bd. 24, Nr. 4, 1.Oktober 1994, Seiten 101-114, XP000477044 KUNG H T ET AL: "CREDIT-BASED FLOW CONTROL FOR ATM NETWORKS: CREDIT UPDATE PROTOCOL, ADAPTIVE CREDIT ALLOCATION, AND STATISTICAL MULTIPLEXING"

## Beschreibung

Verfahren zur Steuerung der Kreditvergabe für bestehende Verbindungen zwischen einer Sendestation und einer Empfängerstation eines Kommunikationsnetzes

Das dienstespezifische verbindungsorientierte Protokoll (SSCOP), das in der ITU-T Empfehlung Q.2110 definiert ist, gewährleistet einen gesicherten Datentransfer zwischen Verbindungsendpunkten des ATM-Adaptation-Layer (AAL).

Im folgenden werden die wichtigsten Protcol Data Units (PDUs) des SSCOPs kurz erläutert.

Eine BGN-PDU wird vom Sender benutzt, um eine Verbindung zu einem Empfänger anzufordern.

Eine BGAK-PDU wird vom Empfänger benutzt, um die Annahme einer Verbindungsanforderung zu bestätigen.

Eine POLL-PDU stellt eine Anforderung der Sendestation an die Empfangsstation dar, auf die die Empfangsstation Statusinformationen (z.B. Informationen, ob die Verbindung von der Empfangsstation als noch bestehend angesehen wird) bezüglich der Verbindung liefern soll.

Eine STAT-PDU stellt ein Antwortpaket auf eine POLL-PDU dar und liefert somit die vorher genannten Statusinformationen.

Eine SD-PDU ist ein Datenpaket, das Nutzinformationen des SSCOP-Benutzers transportiert.

Durch die genannten PDUs wird u.a. ein expliziter Kreditmechanismus zur Flußkontrolle realisiert. Ein Kredit ist die dem Sender vom Empfänger gegebene Erlaubnis, eine bestimmte Anzahl von Datenpaketen (SD-PDU) zu senden. Im SSCOP wird Kredit in erster Linie durch die beiden Parameter N(R) und N(MR) in einem Antwortpaket (STAT-PDU bzw. USTAT-PDU) angezeigt sowie auch durch den Parameter N(MR) in den Beginnsteuerungspaketen BGN-PDU bzw. BGAK-PDU.

Dabei bedeutet N(R) die niedrigste ("niedrigste" ist hier durch die Modulo-Arithmetik definiert) Sequenznummer der durchnumerierten Daten-PDUs (SD-PDU), welche vom Empfänger erwartet wird, d. h. die nächste SD-PDU, deren Empfang keine Empfangslücke erzeugen würde. In BGN- bzw. BGAK-PDUs ist N(R) implizit gleich Null.

N(MR)-1 (wieder Modulo-Arithmetik) bedeutet die höchste Sequenznummer der SD-PDU, die der Empfänger noch empfangen würde, d. h. für die er Puffer zur Verfügung hat bzw. hofft, bei dem Eintreffen dieser SD-PDU zur Verfügung zu haben.

Die Differenz (wieder Modulo-Arethmetik) N(MR) -N(R) wird als Kredit bezeichnet, und das Intervall [N(R), N(MR)] als Empfangsfenster.

Der Sender darf also SD-PDUs nur bis zur Nummer N(MR)-1 senden. Es ist allerdings erlaubt, daß der Empfänger in Abhängigkeit zu seiner lokalen Situation Kredit wieder zurücknimmt, d. h. den Parameter N(MR) also reduziert, jedoch nicht unter die Nummer einer bereits empfangenen (und quittierten) SD-PDU. Dadurch ist es möglich bzw. vom Protokoll her erlaubt, daß der Empfänger eine empfangene SD-PDU verwirft bzw. verwerfen muß, welche vom Sender legal (d. h. gemäß seines zur Sendezeit bestehenden Kredites) gesendet wurde. Dabei kann das Verwerfen unabhängig davon geschehen, ob dem Sender die Kreditreduktion bereits mitgeteilt wurde oder nicht.

Empfängt der Sender eine PDU, die (explizit oder implizit) N(R) = N(MR) festlegt oder hat er bereits die SD-PDU mit der Nummer N(MR)-1 gesendet, darf er also so lange keine Daten-PDU mehr senden, bis er wieder Kredit (N(MR)>N(R)) erhält.

Das bisher am Beispiel des SSCOP erläuterte Verfahren ist ebenfalls aus dem Dokument "Credit-Based Flow Control for ATM Networks", Kung et al.(XP000477044) bekannt.

Als Folge des bisher erläuterten Kreditmechanismusses sollte die Empfangsseite einer SSCOP-Verbindung, nachdem sie der Sendeseite einen Kredit gewährt hat, zumindest etwas Pufferspeicher dafür zur Verfügung stellen, um Daten-PDUs vom Sender erfolgreich zu empfangen. Idealerweise sollte der verfügbare Pufferspeicher derart dimensioniert werden, daß die Empfangsseite in der Lage ist, alle Daten, für die sie Kredit gewährt hat, zu empfangen.

Normalerweise ist jedoch häufig weniger verfügbarer Pufferspeicher ausreichend, um eine zufriedenstellende Performance zu erreichen. Dies hängt ganz wesentlich von der Qualität des Übertragungslinks und der Übertragungsverzögerung ab.

Wenn aufgrund eines schweren Übertragungsfehlers mehr Pufferspeicher als verfügbar benötigt wird, kann der Kredit üblicherweise reduziert oder zurückgezogen werden, sogar wenn der Kredit vorher erst erteilt worden ist. Es gibt jedoch Situationen, wo dies nur durch eine Verletzung der Protokollspezifikation erreicht werden kann, wenn nämlich der reduzierte Kredit eine bereits quittierte Nachricht ausschließen würde.

Bei bestimmten Anwendungen des Protokolls, z.B. wenn diese Anwendungen über Signalisierungskanäle für das User-Network-Interface (UNI) von Breitband-ISDN (B-ISDN) benützt werden, können sich Situationen ergeben, wo einige Kommunikationsknoten, z.B. eine öffentliche oder private ATM-B-ISDN Vermittlungsstelle, unter Benutzung von SSCOP eine große Zahl von Übertragungskanälen behandeln müssen, wobei jedoch die meisten der Übertragungskanäle zumeist frei von Datenverkehr (idle) sind und nur gelegentlich Daten zu übertragen haben (z.B. wenn ein Call aufgebaut oder ausgelöst wird).

Dennoch kann es sein, daß Kommunikationseinrichtungen, die über die genannten Kommunikationsknoten und die genannten Kanäle miteinander verbindbar sind, SSCOP-Verbindungen permanent eingerichtet haben wollen. Außerdem kann es sein, daß viele von diesen Kommunikationseinrichtungen Daten zu mehr oder weniger derselben Zeit übertragen wollen, beispielsweise wenn sie durch ein gemeinsames externes Ereignis getriggert werden, wie z.B. durch den Beginn einer Television Show. Dies könnte einen plötzlichen Anstieg im erforderlichen Empfangsspeicherplatz oder anderen Ressourcen eines Knotens zur Folge haben, der über die momentan verfügbaren Ressourcen hinausgeht, und zwar dann, wenn allen diesen vor Auftreten des externen Ereignisses inaktiven Verbindungen praktisch permanent erlaubt wird, Daten zu senden.

In der Q.2130 wurden die Parameter für SSCOP (Q.2110) so definiert, daß sich bei bestehenden aber sonst inaktiven Verbindungen der Processing Overhead derart in Grenzen hält (periodische Überprüfung des Zustands einer Verbindung - initiiert durch Abfragepakete (POLL-PDUs)- erfolgt in relativ großen zeitlichen Abständen), daß durchaus eine sehr große Anzahl von solchen Verbindungen von einem Prozessor gehandhabt werden kann.

Allerdings wurden weder in der Q.2130 (unter anderem, da Q.2110 keine Möglichkeiten (Parameter) dafür zur Verfügung stellt) noch in der Q.2110 Vorkehrungen getroffen bzw. definiert, welche ein plötzliches Aktivwerden vieler solcher Verbindungen derart kontrollieren könnten, daß dies zu keinen Problemen führen kann.

Während also dem Problem vieler bestehender, inaktiver Verbindungen in bezug auf Prozessoraktivität im Standard Rechnung getragen wurde, wurde dem Problem, das mit einem plötzlichen gleichzeitigen Aktivwerden dieser Verbindungen entsteht, im Standard nicht Rechnung getragen.

Wenn mehrere SSCOP-Verbindungen plötzlich gleichzeitig aktiv werden wollen, kann dadurch z.B. mehr Empfangsspeicher benötigt werden, als tatsächlich verfügbar (wenn man vorraussetzt, daß man die Empfangspuffergröße im Kommunikationsknoten nicht - im Vergleich zum Normalfall - überdimensionieren will). In solchen Situationen kommt es zunächst zu einem Verwerfen von Daten-PDUs im Empfangsknoten, bevor der Kredit vom Empfangsknoten zurückgezogen werden kann, obwohl die verworfenen Daten-PDUs legal und korrekt im Empfangsknoten empfangen wurden (legal und korrekt heißt, daß für diese Daten-PDUs vom Empfangsknoten Kredit gewährt wurde und sie ohne Übertragungsfehler empfangen wurden). Entsteht dieser Verwurf erst nachdem die Nachricht von SSCOP bereits der Gegenseite bestätigt wurde, gibt es auf SSCOP-Ebene keine Möglichkeit mehr, diese Nachricht von der Gegenseite noch einmal anzufordern. Höhere Protokollebenen müßten somit für ein erneutes Senden dieser Nachricht sorgen, was in ineffizienter ist.

Außerdem kann es, abgesehen von den Empfangpuffern, andere Systemressourcen geben, die die Zahl von Nachrichten, die gleichzeitig empfangen werden können, begrenzen.

Wenn durch eine Lastspitze solche Grenzen an Resourcenkapazität überschritten werden, kann es auf der ATM-Ebene (d. h. unterhalb von SSCOP) vorkommen, daß ATM-Zellen verworfen werden. Im Extremfall kann das dazu führen (speziell wenn die SSCOP-Nachrichten mehrere ATM-Zellen lang sind), daß von vielen bzw. den meisten bzw. allen SSCOP-Nachrichten zumindest eine ATM-Zelle verlorengeht, SSCOP damit aber die gesamte Nachricht nicht mehr erhält (unvollständige Nachrichten werden bereits vom Common-Part (siehe Rec.I.363)des AAL verworfen. Das bedeutet, daß SSCOP wenig bzw. nichts zu tun hat (Empfangspuffer und andere Ressourcen von SSCOP bleiben unterbenutzt), da nur wenige bzw. keine Nachrichten durchkommen, obwohl eigentlich eine Lastspitze herrscht. Der genannte Problemfall tritt also, im Unterschied zum vorhergenannten Problemfall, nicht durch die Zurücknahme des Kredits auf. Vielmehr kann dieser Problemfall die Zurücknahme von Kredit sogar verzögern bzw. verhindern.

Der Erfindung liegt die Aufgabe zugrunde, die genannten Probleme bzw. Nachteile zu vermeiden.

Die erfindungsgemäße Verfahrensweise löst diese Aufgabe, indem die Kreditvergabe bei inaktiven SSCOP-Verbindungen anders gestaltet wird als bei aktiven SSCOP-Verbindungen. Durch die erfindungsgemäße Verfahrensweise erhalten auch inaktive Verbindungen weiterhin die Möglichkeit, relativ schnell aktiv zu werden und Daten zu senden, allerdings nur so schnell, daß dabei die Resourcenkapazität der Empfangsstation nicht überschritten werden kann, d. h. die Stabilität des Systems nicht gefährdet und das Protokoll nicht verletzt werden kann.

Im folgenden wird die Erfindung anhand eines Ausführungsbeispiels näher erläutert.

Die erfindungsgemäße Verfahrensweise erfordert in der Empfangsstation Erkennungsmittel, die erkennen, daß eine SSCOP-Verbindung aktiv ist oder aktiv werden will und wann sie wieder inaktiv ist.

Zur Erkennung, daß eine aktive Verbindung inaktiv geworden ist, sind mehrere Varianten vorstellbar:
vai 1): Bei einer ersten Variante wird überwacht, ob in einem bestimmten Zeitraum, in dem z.B. m POLL-PDUs empfangen wurden, trotz gewährten Kredites keine Daten (SD-PDUs) mehr eingetroffen sind.
vai2): Bei einer zweiten Variante wird der in vai1) definierte Zeitraum absolut mittels Timer überwacht.
vai3): Bei einer dritten Variante schließlich stellen die Erkennungsmittel über die Messung der Intervalle der eintreffenden POLL-PDUs fest, ob sich der Sender im Zustand Idle befindet oder nicht (diese Variante setzt entsprechend unterschiedliche Timer beim Sender voraus, was jedoch z.B. bei Anwendungen gemäß Q.2130 gegeben ist).

Anmerkung: Die obige Abkürzung "vai" steht für "Variante-aktiv-inaktiv".

Es wäre auch möglich, daß anstelle der genannten drei Varianten oder zusätzlich dazu, Kenntnisse höherer Protokollebenen ausgenützt werden. Wenn die vorliegende Erfindung z.B. für die Teilnehmersignalisierung verwendet wird, dann könnte das Nichtbestehen von Teilnehmerverbindungen auf der UNI-Schnittstelle, welche durch die Signalisierungsverbindungen kontrolliert wird, (eine)inaktive Signalisierungverbindung(en) anzeigen.

Nachdem erkannt wurde, daß eine Verbindung inaktiv wurde, wird der Kredit auf dieser Verbindung ganz oder teilweise reduziert, indem in den folgenden STAT-PDUs der Parameter N(MR) wieder auf N(R)+c reduziert wird, wobei c dem neuen Kredit entspricht und ggf. Null sein kann.

Zur Erkennung der Aktivität kann prinzipiell zwischen direkten Erkennungsmitteln, d. h. Erkennungsmitteln, die aufgrund einer Signalisierung bzw. Anforderung der Sendestation den Bedarf nach Kredit erkennen und indirekten Erkennungsmitteln unterschieden werden.

Nach Q.2110 sind keine direkten Mittel vorgesehen, um einer Empfangsstation zu signalisieren, daß (bezüglich einer bestehenden inaktiven Verbindung) eine Nachricht auf die Übertragung wartet, und daß deshalb dringend ein Kredit benötigt wird.

Zur Erkennung, daß eine inaktive Verbindung aktiv geworden ist bzw. aktiv werden will, sind wiederum mehrere Varianten, basierend auf indirekten Erkennungsmitteln, vorstellbar:
via1) Einer inaktiven Verbindung wird - zumindest periodisch - ein u.U. kleiner Kredit gewährt. Wird danach eine SD-PDU empfangen, so wird die Verbindung wieder als aktiv angesehen. Diese Methode ist analog zu vai1 bzw. vai2. Wird die Verbindung nicht wieder aktiv, also innerhalb eines Zeitraumes gemäß vai1oder vai2 keine SP-PDU empfangen, so gilt die Verbindung weiterhin als inaktiv. Periodische Kreditvergabe an inaktive Verbindungen bedeutet, daß der gewährte Kredit bei Nichtinanspruchnahme wieder entzogen wird, indem in den folgenden STAT-PDUs der Parameter N(MR) wieder auf N(R) reduziert wird.
via2) Inaktiven Verbindungen wird generell kein Kredit gewährt. Das Intervall zwischen dem Eintreffen von POLL-PDUs wird jedoch auf solchen Verbindungen überwacht. Dies setzt voraus, daß POLL-PDUs in Abhängigkeit des Zustandes (aktiv oder inaktiv) in unterschiedlichen Intervallen eintreffen. Dies ist jedoch z.B. für Anwendungen gemäß Q.2130 gewährleistet. Diese Methode ist analog zu vai3.

Anmerkung: Die obige Abkürzung "via" steht für "Variante-inaktiv-aktiv".

Wenn man erkannt hat, daß eine Verbindung aktiv werden will, wird ihr nach Maßgabe der zur Verfügung stehenden Resourcen Kredit gewährt bzw. bestehender Kredit erhöht. Dies kann jedoch je nach Lage auch mit mehr oder weniger großer Verzögerung erfolgen.

Welche der beiden Methoden via1 bzw. via2 günstiger ist, hängt von der Systemarchitektur und dem Einsatzfall ab.

Wenn die Methode nach via1 gewählt wurde, wird also inaktiven Verbindungen der Kredit periodisch gewährt.

Bei den inaktiven Verbindungen wird ein periodisch gewährter Kredit, der vom Sender wegen Inaktivität nicht verbraucht wird, periodisch wieder entzogen. Der Sender bekommt also periodisch die Gelegenheit, aktiv zu werden. Wenn er einmal aktiv ist, wird ihm soviel Kredit wie möglich bzw. nötig gewährt und dieser Kredit wird im Normalfall auch nicht mehr entzogen, sondern vom Sender selbst verbraucht.

Um die periodische Zuteilung von Krediten zu erreichen, kann ein auf einem Zähler basierender Mechanismus zum dynamischen Zuweisen bzw. time-sharing von Krediten (das time-sharing von Krediten geht von der Annahme aus, daß die Anzahl der für inaktive Verbindungen vergebbaren Kredite geringer ist, als die Anzahl der inaktiven Verbindungen selbst. Da es keine Bruchteile von Krediten gibt, können sich die inaktiven Verbindungen diese Kredite nur über die Zeit hinweg teilen, müssen also "time sharing" der Kredite betreiben) bezüglich inaktiver Kanäle verwendet werden. Dieser Mechanismus wird im folgenden näher erläutert.

Es sei N die Anzahl von bestehenden, jedoch inaktiven SSCOP-Verbindungen. Außerdem sei 1/k (k>1) derjenige Anteil der inaktiven SSCOP-Verbindungen, dem Kredit erteilt werden kann, sodaß die Wahrscheinlichkeit, daß eine Systemverschlechterung durch das gleichzeitige Aktivwerden der diesem Anteil entsprechenden inaktiven Verbindungen ausreichend klein ist (N und 1/k sind vom Zustand des Systems abhängig und ändern sich im Lauf der Zeit).

Die einfachste Version des genannten Algorithmus besteht nun darin, bei Empfang von POLL-PDUs auf inaktiven SSCOP-Verbindungen einen Kredit c (zum Zwecke der Unterscheidung im folgenden als Basiskredit c bezeichnet) nur nach jedem k-tem POLL zu erteilen. Da das Aktiv- bzw. Inaktivwerden von Verbindungen normalerweise nicht synchronisiert geschieht, sondern statistisch verteilt ist, werden mit dieser Methode im Mittel gesehen nur N/k inaktiven Verbindungen gleichzeitig Kredite gewährt. Es kann jedoch vorkommen, daß dabei zeitweise die Anzahl der inaktiven Verbindungen mit Kredit den Wert N/k überschreitet. Man kann den Algorithmus nun dahingehend erweitern, daß man vor einer (aufgrund des k-ten POLLs) zu erfolgenden Kreditvergabe diese noch zusätzlich von der zu diesem Zeitpunkt bestehenden Anzahl der inaktiven Verbindungen mit Kredit abhängig macht und den Kredit nicht vergibt, wenn diese Anzahl den Wert N/k bereits erreicht oder um ein definiertes Maß überschritten hat.

Dadurch erhält also eine inaktive Verbindung auf eine POLL-Anforderung nur mit einer Wahrscheinlichkeit 1/k einen Basisredit c (c wird normalerweise eine kleine Zahl (möglicherweise 1) sein und niedriger als derjenige Kredit, der einer aktiven Verbindung erteilt wird).

Ein Beispiel für die Realisierung des obengenannten Mechanismus in einem Empfangsknoten wird nunmehr in Form eines Pseudocodes gegeben:

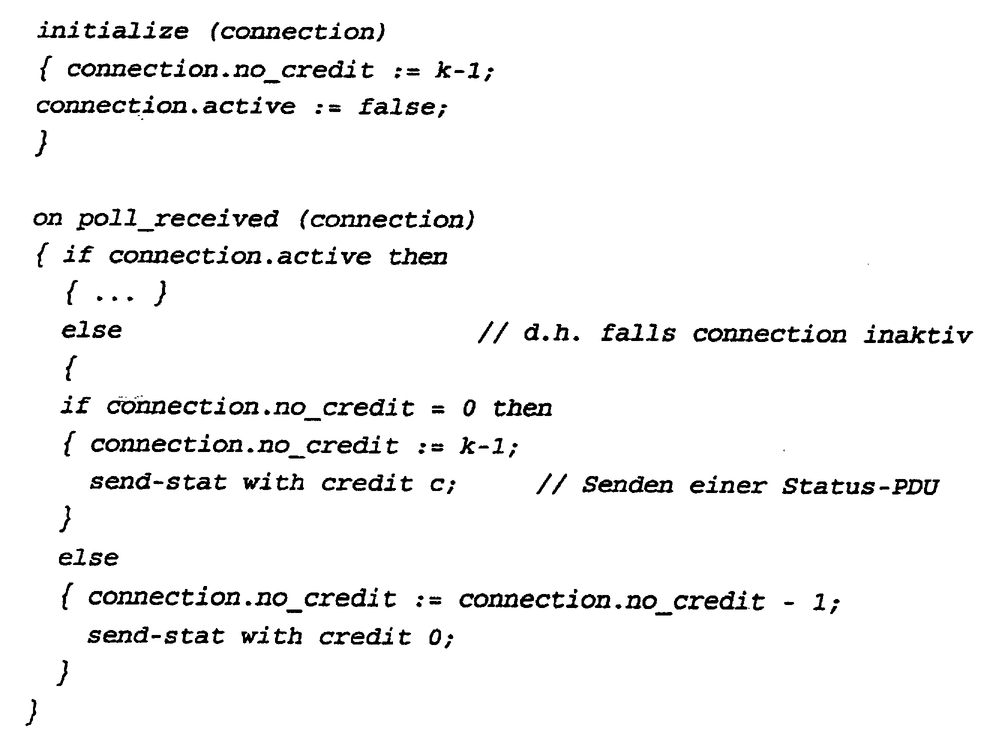

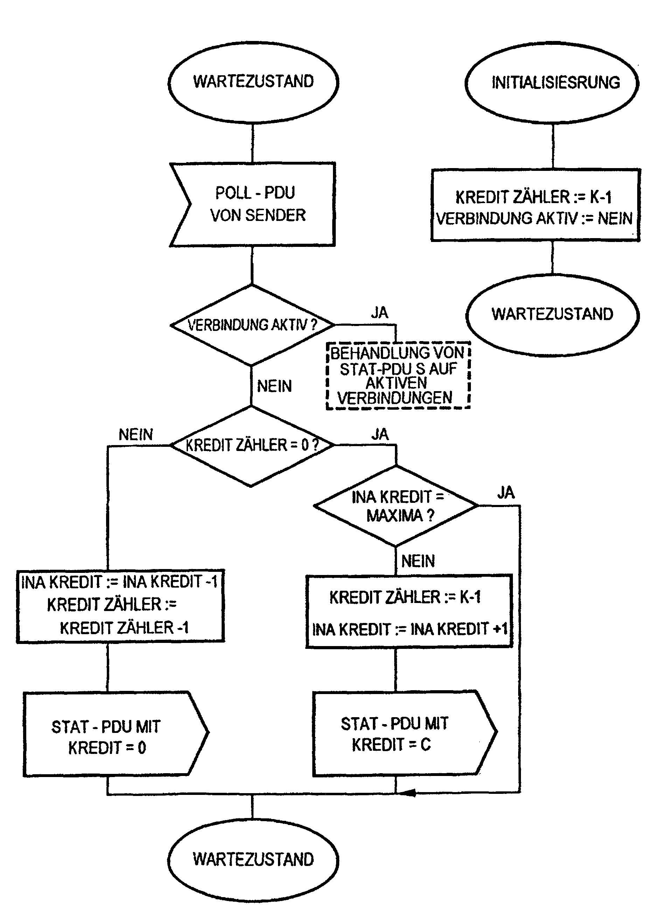

Die Figur zeigt ebenfalls ein Beispiel für die Realisierung des obengenannten Mechanismus in einem Empfangsknoten. Bei diesem Beispiel wird mithilfe eines Zählers InaKredit zusätzlich die Gesamtzahl der inaktiven Verbindungen mit Kredit überwacht.

Im folgenden wird der erfindungsgemäße Ablauf unter Einbeziehung der in Q.2110 definierten Timer erläutert. Um die Erläuterungen nicht unnötig zu verkomplizieren, bleiben Phasen, in denen der Timer "Timer-Keep-Alive" läuft (siehe Q.2110, §7.6b), d.h. in Perioden, in denen sich eine Verbindung aus der Sicht der Sendestation in einer Zwischenphase zwischen aktiv und inaktiv befindet, außer Betracht.

Für eine inaktive Verbindung läuft der Timer "Timer-Idle" (siehe Q.2110, §7.6c), d.h. die Übertragungseinrichtung (Transmitter, Sendestation, Sendenknoten) überträgt POLL-PDUs, die dem Empfänger Gelegenheit geben, Kredit zu gewähren, in "Timer-Idle"-Intervallen. Für eine aktive Verbindung läuft der Timer "Timer-POLL" (siehe Q.2110, §7.6, d.h. die Übertragungseinrichtung überträgt POLL-PDUs in "Timer-POLL"-Intervallen, die normalerweise kürzer als die "Timer-Idle"-Intervalle sind (z.B. bei Anwendungen gemäß Q2130).

Sobald für die bisher inaktive Verbindung nun in der Sendestation wieder wenigstens ein Datum zum Senden vorliegt, ist die Verbindung aus der Sicht der Sendestation wieder aktiv. Für den Fall, daß die Sendestation momentan zur Übertragung der vorliegenden Daten keinen Kredit hat, sollte dafür gesorgt sein, daß die betrachtete inaktive Verbindung möglichst schnell auch aus der Sicht der Empfangsstation in eine aktive Verbindung umgewandelt wird (siehe Q.2110, §7.6a).

Diese Umwandlung wird dadurch beschleunigt, daß die Sendestation nunmehr POLL-PDUs in "Timer-POLL"-Intervallen überträgt.

Aufgrund dieser Maßnahme hängt die Wartezeit auf den Basiskredit, den eine inaktive Verbindung erhält, nicht mehr von dem normalerweise größeren Zeitintervall "Timer-Idle" ab, sondern von dem kleineren Intervall "Timer-POLL". Spätestens -je nach Mehode kann dies bereits über das verkürzte POLL Intervall geschehen sein - sobald die Sendestation den Basiskredit erhält und daraufhin das Datum sendet, erkennt die Empfangsstation bei Empfang des Datums, daß die Verbindung nunmehr wieder aktiv ist und sie den Modus der Kreditvergabe entsprechend umstellen muß. Die Umwandlung ist damit vollzogen.

Im erläuterten Beispiel wurde angenommen, daß die Timer-POLL-Intervalle kürzer als die Timer-Idle-Intervalle sind. Diese Annahme ist keine notwendige Voraussetzung für das Funktionieren des erfindungsgemäßen Mechanismusses, wenn er für die Erkennung des Aktivwerdens die Mehthode gemäß via 1 benutzt, doch wird unter dieser Voraussetzung die notwendige Kreditvergabe für eine Verbindung, die aktiv werden will, noch weiter beschleunigt.

Der erfindungsgemäße Mechanismus gemäß via1 kann leicht entsprechend dem verfügbaren Empfangsspeicherplatz angepaßt werden, d.h. je weniger verfügbarer Empfangsspeicherplatz, umso stärker kann mithilfe des erfindungsgemäße Mechanismusses über die Veränderung des Anteils 1/k die Zahl von Kanälen, die gleichzeitig (innerhalb eines bestimmten Zeitintervalls) aktiv werden können, begrenzt werden. Dies kann etwa bei denjenigen Ausprägungen der Erfindung, welche auf periodischer Kreditvergabe auf inaktiven Verbindungen beruhen, daurch geschehen, daß höher prioren inaktven Verbindungen öfter Gelgenheit geboten wird, Daten zu senden, als niedriger prioren Verbindungen, d.h. die höher prioren Verbidnungen öfter Kredit erhalten.

Sollte bei denjenigen Ausprägungen der Erfindung, welche auf peiodischer Kreditvergabe auf inaktiven Verbindungen beruhen, die Größe des Zeitintervalls "Timer-POLL" etwa in der Größenordnung des Round-Trip-Delay (hier definiert als die Zeit vom Aussenden einer Nachricht bis zum Empfang der Antwort darauf)liegen oder kleiner sein, kann es passieren, daß die Empfangsstation einen Kredit bereits wieder rückgängig gemacht hat, bevor die vom Sender übertragenen Daten-PDUs beim Empfänger ankommen. Um auch diese Fälle erfolgreich zu behandeln, gibt es vier Möglichkeiten. Die erste Möglichkeit besteht darin, daß Zeitintervall "Timer-POLL" zu erhöhen. Die zweite Möglichkeit besteht darin, die Zahl der aufeinanderfolgenden POLL-Intervalle zu erhöhen, in denen ein Kredit gewährt wird, z.B. indem man in zwei von drei Intervallen Kredit gewährt (siehe weiter unten). Die dritte Möglichkeit besteht darin, eine Daten-PDU anzunehmen, ohne dem Sender dafür Kredit gewährt zu haben (unter der Voraussetzung, daß Pufferspeicher zur Verfügung ist und ein Kredit während der vorhergehenden letzten X-Intervalle bereits einmal gewährt wurde). Die vierte Möglichkeit besteht darin, die Daten-PDU gemäß dem Protokoll zu verwerfen, aber die Verbindung von nun ab als aktiv zu betrachten. Zu bemerken ist, daß die dritte Möglichkeit tatsächlich eine Änderung in SSCOP zur Folge hat, die jedoch keine Interworkingprobleme mit Implementationen verursacht, die gemäß Q.2110 arbeiten.

Im folgenden werden Erweiterungen bzw. Ausgestaltungen der genannten Basis-Methode gemäß via 1 näher erläutert.

Eine Erweiterung der genannten Basismethode besteht darin, daß nicht jede k-te Status-PDU einen Kredit gewährt, sondern nur ein Teil n/m (n ≤ m), so daß n von m Status-PDUs einen Kredit gewähren. Eine Ausgestaltung dieser Erweiterung besteht darin, die n-Perioden mit Kredit so gleichmäßig wie möglich über die insgesamt m-Perioden zu verteilen. Diese Ausgestaltung hängt jedoch auch von der relativen Größe des Zeitintervalls "Timer-POLL" im Vergleich zu dem Round-Trip-Delay ab.

Eine andere Erweiterung der Basismethode besteht darin, die Einführung von Prioritäten unter den verschiedenen Kommunikationseinrichtungen, die mit einem Kommunikationsknoten verbunden sind, zu erlauben. Auf diese Weise wird bestimmten Kommunikationsendgeräten im Vergleich zu anderen während mehrerer POLL-Perioden Kredit gewährt. Dadurch werden diese Kommunikationsgeräte in die Lage versetzt, schneller aktiv zu werden bzw. weniger wahrscheinlich vom Aktivwerden ausgeschlossen zu sein. Die höchste Priorität in diesem Sinne würde bedeuten, einem Kommunikationsgerät - auch auf einer inaktiven Verbindung - immer zumindest Basis-Kredit zu gewähren.

Im folgenden werden weitere Anwendungen der Erfindung erläutert.

Eine weitere Anwendung der Erfindung besteht darin, mit Hilfe der Erfindung die Anzahl der aktiven SSCOP-Verbindungen in einem Kommunikationsknoten zu kontrollieren, falls im Kommunikationsknoten andere Ressourcen-Restriktionen vorliegen, als die bisher angegebenen Ressourcen-Restriktionen für die Empfangspuffer. Es ist also möglich, daß ein Knoten zwar ausreichend Empfangspufferkapazität für SSCOP-Verbindungen zur Verfügung hat, seine Processing-Kapazität jedoch z.B. der eigentliche begrenzende Faktor für die Zahl der gleichzeitig behandelbaren SSCOP-Verbindungen ist.

Mit bisher bekannten Methoden wird die Zahl von hergestellten SSCOP-Verbindungen auf die Zahl der vom System behandelbaren Verbindungen begrenzt. Dieses Verfahren hat jedoch folgende Nachteile.

Entfernte Kommunikationsgeräte (Remote Devices) könnten trotz der genannten Begrenzung versuchen SSCOP-Verbindungen herzustellen (dies ist nach dem Protokoll erlaubt) und die Versuche andauernd wiederholen, selbst wenn ein sofortiger Bedarf an einer solchen Verbindung nicht besteht. Dies würde eine zusätzliche Belastung für das System darstellen, aufgrund deren die Processing-Kapazität, die für aktive Verbindungen zur Verfügung steht noch weiter verringert wird.

Ein weiterer Nachteil ist folgender: Das Herstellen einer SSCOP-Verbindung erfordert normalerweise mehr Processing (beispielsweise müssen beim Herstellungsvorgang Zustandsvariablen zugewiesen und initialisiert werden), als einfach nur das Zuteilen von Krediten. Deshalb würde, selbst wenn sich die entfernten Kommunikationsendgeräte damit begnügen würden nur für solche SSCOP-Verbindungen Verbindungsversuche zu machen, die wirklich notwendig sind, so würden diese Herstellungsversuche länger dauern und mehr Belastung an den Kommunikationsknoten stellen, als der erfindungsgemäße Mechanismus.

Der erfindungsgemäße Mechanismus kann also auch zur Überlastregelung verwendet werden, wenn der genannte Kredit jeweils in Abhängigkeit der momentan zur Verfügung stehenden Processing-Kapazität berechnet wird.

## Patentansprüche

1. Verfahren zur Steuerung der Kreditvergabe für bestehende Verbindungen zwischen einer Sendestation und einer Empfängerstation eines Kommunikationsnetzes, demgemäß
a) von der Empfängerstation zwischen einer aktiven und einer inaktiven bestehenden Verbindung unterschieden wird, wobei eine bestehende Verbindung von der Empfängerstation als inaktiv eingestuft wird, wenn bezüglich dieser bestehenden Verbindung über einen bestimmten Zeitraum hinweg keine Daten-PDUs empfangen wurden bzw. im anderen Fall als aktiv eingestuft wird,
b) einer aktiven Verbindung von der Empfängerstation ein Kredit vergeben wird, d.h. die Erlaubnis bis zu einer erneuten Kreditvergabe eine bestimmte Anzahl von Daten-PDUs zu senden, wobei die genannte bestimmte Anzahl in Abhängigkeit von den in der Empfängerstation für die Behandlung der Verbindungen zur Verfügung stehenden Ressourcenkapazität berechnet wird,
c) einer inaktiven Verbindung kein Kredit vergeben wird oder periodisch ein Kredit vergeben wird, der bei Nichtinanspruchnahme, d.h. bei Nichtaktivwerden der Verbindung, wieder zurückgezogen wird, bevor gemäß der Periode erneut Kredit vergeben wird.

2. Verfahren nach Anspruch 1
**dadurch gekennzeichnet,daß**
verschiedene inaktive Verbindungen verschiedene Prioritäten haben können und höher prioren inaktiven Verbindungen in kürzeren Perioden Kredit gewährt wird.

3. Verfahren nach Anspruch 1
**dadurch gekennzeichnet, daß**
Kredite vom Empfänger in speziellen Protokollpaketen (STATUS-PDUs) vergeben werden, wobei einer inaktiven Verbindung nur in n von m (n<m) STATUS-PDUs Kredit gewährt wird und in den übrigen m-n STATUS-PDUs kein Kredit gewährt wird bzw. zuvor gewährter Kredit wieder entzogen wird.

4. Verfahren nach Anspruch 3
**dadurch gekennzeichnet, daß**
die Zahlen n und m in Abhängigkeit von den jeweils verfügbaren Resourcen in der Empfangsstation mit der Zeit verändert werden.

5. Verfahren nach Anspruch 3 oder 4,
**dadurch gekennzeichnet, daß**
der genannte periodische Kredit für inaktive Verbindungen versagt wird, wenn zum Zeitpunkt der Kreditvergabe die Anzahl der aktuell bestehenden inaktiven Verbindungen mit Kredit einen bestimmten Wert übersteigt.

## Claims

1. Method for controlling the allocation of credit for existing connections between a transmitting station and a receiver station in a communications network, according to which
a) the receiver station distinguishes between an active and an inactive existing connection, with an existing connection being classified as inactive by the receiver station if no data PDUs have been received for this existing connection over a particular period of time, and otherwise being classified as active,
b) the receiver station allocates an active connection a credit, i.e. the authorization to send a particular number of data PDUs before credit is allocated again, said particular number being calculated on the basis of the resource capacity available in the receiver station for handling the connections,
c) an inactive connection is not allocated any credit or is cyclically allocated a credit which is withdrawn again if it is not used, i.e. if the connection becomes inactive, before credit is allocated again on the basis of the period.

2. Method according to Claim 1,
**characterized in that** various inactive connections can have various priorities, and inactive connections with relatively high priority are granted credit in shorter periods.

3. Method according to Claim 1,
**characterized in that**
credits are allocated by the receiver in specific log packets (STATUS-PDUs), with an inactive connection being granted credit only in n or m (n<m) STATUS-PDUs and not being granted any credit, or having previously granted credit withdrawn again, in the remaining m-n STATUS-PDUs.

4. Method according to Claim 3,
**characterized in that**
the numbers n and m are altered over time on the basis of the respectively available resources in the receiving station.

5. Method according to Claim 3 or 4,
**characterized in that**
said cyclic credit is refused for inactive connections if, at the time of credit allocation, the number of currently existing inactive connections with credit exceeds a particular value.

## Revendications

1. Procédé destiné à contrôler l'allocation de crédit pour des liaisons existantes entre une station d'émission et une station de réception d'un réseau de communication selon lequel
a) à partir de la station de réception, on fait une distinction entre une liaison existante active et une liaison existante inactive, une liaison existante étant classée comme inactive par la station de réception, lorsque, en ce qui concerne cette liaison existante, pendant une période de temps déterminée, aucune PDU de données n'est reçue, et comme active dans le cas contraire,
b) la station de réception accorde à une liaison active un crédit, c'est-à-dire l'autorisation d'émettre, jusqu'à une nouvelle allocation de crédit, un nombre défini de PDUs de données, ledit nombre défini étant calculé en fonction des capacités en ressources disponibles dans la station de réception pour le traitement des liaisons,
c) aucun crédit n'est accordé à une liaison inactive ou un crédit est accordé périodiquement à une liaison inactive, qui est de nouveau retiré s'il n'est pas utilisé, c'est-à-dire si la liaison devient inactive, avant qu'un crédit ne soit de nouveau accordé conformément à la périodicité.

2. Procédé selon la revendication 1
**caractérisé par le fait**
**que** diverses liaisons inactives peuvent avoir diverses priorités et que du crédit est alloué à des liaisons inactives de priorité supérieure avec une périodicité plus courte.

3. Procédé selon la revendication 1
**caractérisé par le fait**
**que** des crédits du récepteur sont accordés dans des paquets spéciaux du protocole (PDUs de statut), un crédit n'étant alloué à une liaison inactive que dans n PDUs de statut parmi m PDUs de statut et aucun crédit n'étant accordé dans les m - n PDUs de statut restants ou bien du crédit accordé antérieurement étant retiré.

4. Procédé selon la revendication 3
**caractérisé par le fait**
**que** les nombres n et m sont modifiés dans le temps en fonction des ressources disponibles dans chaque cas dans la station de réception.

5. Procédé selon la revendication 3 ou 4
**caractérisé par le fait**
**que** ledit crédit périodique est refusé pour des liaisons inactives si, à l'instant de l'allocation du crédit, le nombre de liaisons inactives, existant à cet instant et ayant un crédit, dépasse une valeur déterminée.
